# DEMANDE DE BREVET EUROPEEN

(11) **EP 3 214 507 A1**
(43) Date de publication de la demande: **06.09.2017**
(21) Numéro de dépôt: 16158753.0
(22) Date de dépôt: 04.03.2016
(51) Int. Cl.: G04B 19/10, G04D 3/00, G04D 3/02, B29C 45/16, B29C 45/00

(54) **METHODE D'ALIGNEMENT DES APPLIQUES**

(71) Demandeur: The Swatch Group Research and Development Ltd., 2074 Marin (CH)
(72) Inventeur: Dubach, Alban, 2502 Bienne (CH)
(74) Mandataire: Goulette, Ludivine

(57) **Abrégé**

Procédé d'assemblage d'un cadran (1) réalisé dans un premier matériau, ledit cadran comprenant au moins deux appliques (3) réalisées dans un second matériau, le procédé comprenant les étapes suivantes :
- Les appliques sont rendues solidaires dans leur position définitive l'une par rapport à l'autre via un pont (5) afin de former au moins un ensemble d'appliques (7);
- Placer l'ensemble d'appliques sur le cadran;
- Désolidariser les appliqes les unes des autres par enlévement du pont entre deux appliques.

## Description

La présente invention concerne un procédé d'assemblage d'un cadran réalisé dans un premier matériau, ledit cadran comprenant au moins deux appliques réalisées dans un second matériau.

### ARRIERE PLAN TECHNOLOGIQUE

Les montres mécaniques sont généralement munies d'un cadran sur lequel une multitude d'informations sont agencées. Ces informations peuvent être des informations permettant à des aiguilles d'indiquer au moins une information horaire ou des informations plus génériques comme la marque de la montre ou certaines de ses caractéristiques comme le fait que la montre est de type chronomètre c'est-à-dire dotée d'une certaine précision. Ces informations agencées sur le cadran peuvent l'être de plusieurs façons. Une première façon consiste à avoir une décalcomanie ou une sérigraphie que l'on vient appliquer sur le cadran.

Une seconde façon est d'avoir des appliques. Ces appliques consistent en des chiffres, index ou signes découpés dans des plaques métalliques ou plastiques et ensuite collés, soudés ou rivés sur le cadran.

Or, il est nécessaire que ces appliques soient parfaitement alignées car l'oeil humain est capable de distinguer la moindre imprécision de placement surtout si les appliques sont proches les unes des autres, par exemple pour écrire un nom ou un mot.

Pour régler ce problème, deux solutions ont été trouvées. La première solution consiste à équiper les appliques avec deux pieds que l'on entre dans des trous agencés sur le cadran. Toutefois, si les appliques deviennent très petites, il est difficile de fabriquer les pieds et pénible de manipuler les pièces. En plus, pour garantir que les pieds entrent dans les trous du cadran, certaines tolérances de fabrication doivent être imposées. Ces tolérances imposent un jeu entre les pieds et les trous, et ont pour conséquence que les appliques peuvent être mal alignées l'une par rapport à l'autre une fois assemblées.

Une autre solution consiste à relier les différentes appliques entre elles lorsqu'elles sont utilisées pour former un mot comme le nom d'une marque. Cette configuration permet de réaliser les appliques en une fois et donc d'avoir les appliques solidaires les unes des autres de sorte qu'elles sont déjà alignées entre elles.

Néanmoins, cette solution présente l'inconvénient de limiter la géométrie des appliques puisqu'il devient alors nécessaire de concevoir les appliques afin qu'elles puissent être relié les unes aux autres. De plus, l'aspect esthétique d'un nom ou d'une marque dont les lettres sont reliées selon le procédé décrit ci-dessus, peut ne pas correspondre au niveau design à l'esthétique souhaitée.

### RESUME DE L'INVENTION

La présente invention a pour but de pallier aux inconvénients de l'art antérieur en proposant une méthode pour aligner des appliques sur un cadran de façon précise et simple.

A cet effet, l'invention concerne un procédé d'assemblage d'un cadran réalisé dans un premier matériau, ledit cadran comprenant au moins deux appliques réalisées dans un second matériau. Le procédé comprend les étapes suivantes :
- Se munir des appliques, celles-ci ayant subi préalablement une étape de fabrication durant laquelle elles sont rendues solidaires dans leur position définitive l'une par rapport à l'autre via un pont ;
- Placer les appliques rendues solidaires sur le cadran et les fixer audit cadran ;
- Désolidariser les appliques les unes des autres par enlèvement du pont entre deux appliques.

Dans un premier mode de réalisation avantageux, l'épaisseur du pont varie de 10% à 50% de l'épaisseur de l'applique.

Dans un second mode de réalisation avantageux, l'ensemble d'appliques comprend au moins deux pieds aptes à coopérer avec des trous du cadran.

Dans un troisième mode de réalisation avantageux, les trous du cadran sont traversant ou borgnes.

Dans un quatrième mode de réalisation avantageux, les appliques sont fabriquées en utilisant une technique choisie dans la liste comprenant : l'usinage, l'étampage, l'injection, le LIGA, l'impression 3D ou le formage à chaud.

Dans un cinquième mode de réalisation avantageux, les ponts sont enlevés en utilisant une technique choisie dans la liste comprenant : la découpe laser ou l'usinage, la découpe mécanique, le meulage ou le polissage.

Dans un sixième mode de réalisation avantageux, le pont entre deux appliques d'un ensemble d'appliques est positionné de sorte à affleurer la surface des appliques visibles lorsque les appliques sont agencées sur le cadran.

Dans un septième mode de réalisation avantageux, le pont entre deux appliques d'un ensemble d'appliques est positionné à mi-hauteur des appliques.

L'invention concerne en outre un ensemble d'appliques comprenant au moins deux appliques, caractérisé en ce que lesdites appliques sont rendues solidaires dans leur position définitive l'une par rapport à l'autre via un pont.

Dans un premier mode de réalisation avantageux, l'épaisseur du pont varie de 10% à 50% de l'épaisseur de des appliques.

Dans un second mode de réalisation avantageux, le pont entre deux appliques d'un ensemble d'appliques est positionné à mi-hauteur des appliques.

### BREVE DESCRIPTION DES FIGURES

Les buts, avantages et caractéristiques de l'invention apparaîtront plus clairement dans la description détaillée suivante d'au moins une forme de réalisation de l'invention donnée uniquement à titre d'exemple non limitatif et illustrée par les dessins annexés sur lesquels :
- La figure 1 représente schématiquement un cadran portant des appliques;
- Les figures 2a, 2b et 3 représentent schématiquement un ensemble d'appliques selon l'invention;
- Les figures 4 à 6 représentent schématiquement un ensemble d'appliques posé sur un cadran selon l'invention;
- Les figures 7a et 7b représentent schématiquement un troisième mode de réalisation du procédé selon l'invention;
- Les figures 8 et 9 représentent schématiquement une variante de l'invention.

### DESCRIPTION DETAILLEE

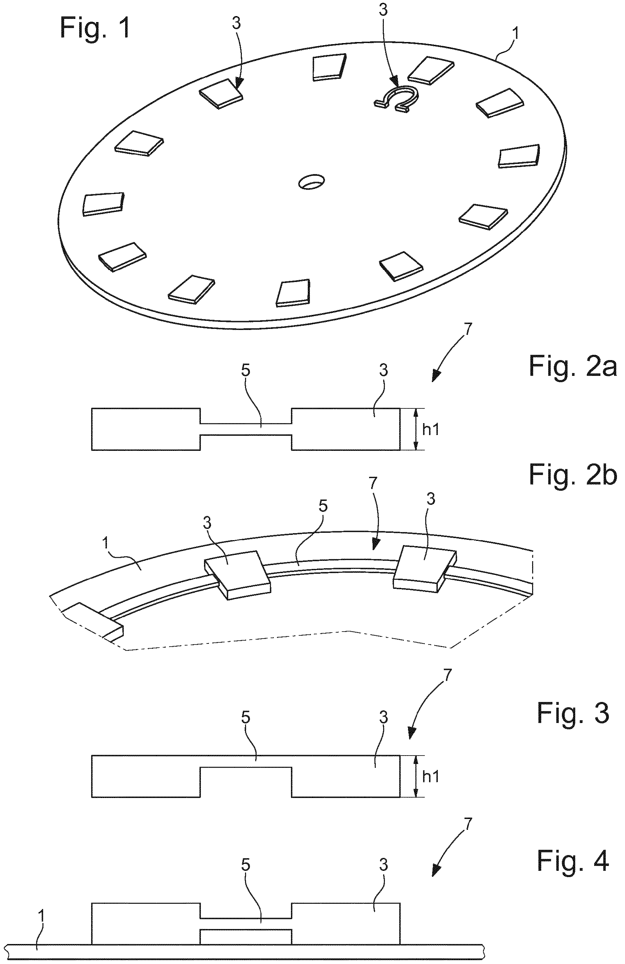

Sur la figure 1, un cadran 1 muni d'appliques 3 est représenté. Ces appliques 3 peuvent être des indices horaires agencés sur le cadran comme un tour d'heure ou des signes tels qu'un logo ou un nom de marque.

La présente invention consiste avantageusement en un procédé permettant la mise en place de ces appliques 3 en assurant leur positionnement relatif.

Une première étape consiste à se munir des appliques 3 en les fabriquant. Avantageusement selon l'invention, cette étape consiste à fabriquer les appliques tout en gardant au moins un pont 5 entre deux appliques voisines l'une de l'autre comme visibles aux figures 2a, 2b et 3. Cela permet de former un ensemble d'appliques 7. Ces appliques 3 peuvent être réalisées en plastique ou en métal ou alliage ou en matériau monocristallin ou polycristallin.

Ces ponts sont réalisés pour solidariser deux appliques l'une avec l'autre. Bien entendu, il faut essayer de minimiser la dimension du pont 5 pour faciliter l'enlèvement mais en gardant les dimensions suffisamment larges afin de garantir la rigidité nécessaire pour la manipulation et la fixation des appliques sans casse. Ainsi, un pont 5 dont l'épaisseur varie de 10% à 50% de l'épaisseur de l'applique sera utilisé. Bien entendu, cette épaisseur dépendra du matériau utilisé pour les appliques, un matériau rigide permettant un pont moins épais qu'un matériau plus souple.

Pour fabriquer ces appliques avec au moins un pont entre elles, les techniques d'usinage, d'étampage, d'injection, de LIGA, d'impression 3D, de formage à chaud d'un verre métallique peuvent être utilisées.

On obtient alors les appliques 3 dans leur configuration finale c'est-à-dire ayant leur hauteur finale h1 et leur décoration de surface, ces appliques 3 étant disposées entre elles dans leur position définitive via les ponts 5 formant ainsi un ensemble d'appliques. La position des ponts 5 peut varier en hauteur de sorte que les ponts peuvent affleurer la face visible des appliques ou non.

Dans une seconde étape, l'ensemble d'appliques 7 est placé sur le cadran 1 comme visible aux figures 4 à 6. L'opérateur utilise généralement des brucelles pour placer les appliques sur le cadran de sorte à ne pas les abimer. Le cadran 1 pourra être muni de marquages pour aider à placer les appliques.

Dans une variante, l'ensemble d'appliques comprend au moins deux pieds 4 réalisés pour s'insérer dans des trous 9, 9' percés sur le cadran 1. Ces trous peuvent être borgnes 9 ou traversants 9'. Le cadran pourra être également muni de trous borgnes 9 ou lamages formant une empreinte pour chaque applique 3.

L'ensemble d'appliques 7 comprend au moins deux pieds 4 car la présence d'au moins deux pieds permet un blocage de l'ensemble d'appliques afin d'éviter toutes pertes d'alignement.

Pour fixer définitivement les appliques 3 sur le cadran 1, ces appliques peuvent être collées ou clipsées ou soudées ou brasées ou rivetées ou utiliser une combinaison de ces différentes techniques.

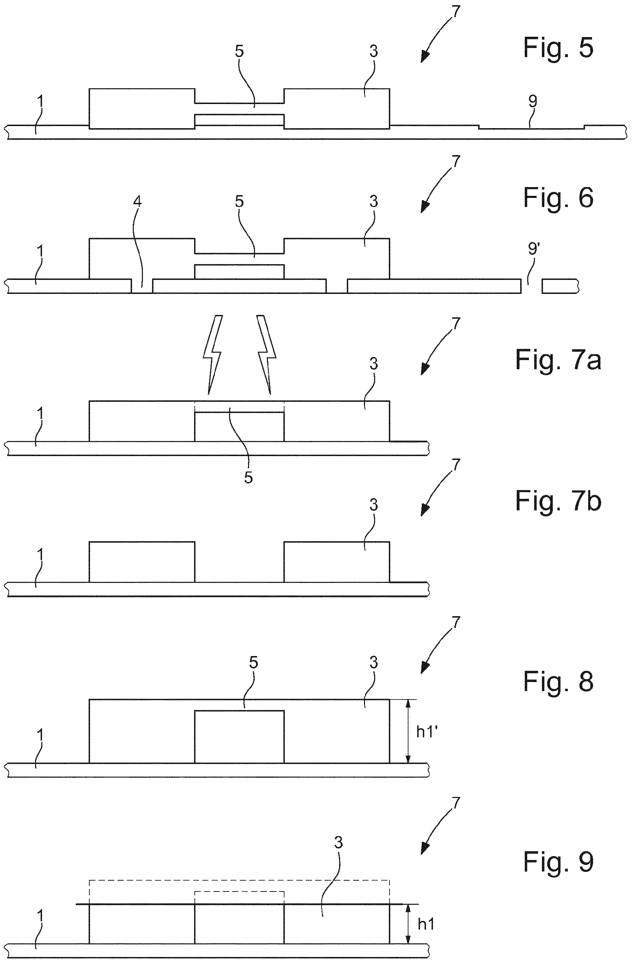

Astucieusement, une troisième étape est réalisée. Cette troisième étape consiste à enlever les ponts 5 entre les appliques 3 comme visible aux figures 7a et 7b. En effet, ces ponts 5 servent à maintenir la position des appliques les unes par rapport aux autres afin d'éviter une rupture d'alignement entre les appliques 3.

Pour opérer cette troisième étape, l'opérateur peut utiliser une technique laser ou utiliser un outil d'usinage, de découpe, de meulage afin de séparer les ponts 5 des appliques 3.

Bien entendu, l'opérateur peut utiliser une combinaison de ces outils et méthodes. Par exemple, dans le cas où le pont se trouve positionné à mi-hauteur par rapport à deux appliques, la méthode utilisant un laser peut être suivie de l'utilisation d'un outil de polissage pour gommer les aspérités qui auraient pu être créées lors de l'enlèvement du pont 5. Le fait d'avoir un pont positionné à mi-hauteur de l'applique 3 contrairement au cas où le pont affleure la surface visible des appliques 3 permet avantageusement de ne pas faire l'opération d'enlèvement au niveau des arrêtes du décor. De cette façon, les risques d'endommager l'esthétique des appliques 3 sont grandement diminués.

Dans une variante de l'invention visible aux figures 8 et 9, les appliques 3 dans leur position définitive les unes par rapport aux autres sont réalisées pour avoir une hauteur h1' qui n'est pas leur hauteur définitive h1. La position des ponts 5 peut varier en hauteur de sorte que les ponts 5 peuvent affleurer la face visible des appliques 3 ou non. Cette variante permet d'avoir plus de flexibilité. En effet, le fait d'avoir une épaisseur h1' des appliques 3 qui est supérieure à l'épaisseur définitive permet, selon les configurations, d'usiner des pieds pour chaque applique 3 ou de laisser de la matière pour les décorations de surfaces.

De même cela permet d'utiliser une méthode d'enlèvement de pont basée sur le polissage. En effet, si le pont est agencé sur la surépaisseur ajoutée aux appliques, un polissage permet d'enlever uniformément la surface des appliques et donc d'enlever proprement le pont.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Procédé d'assemblage d'un cadran (1) réalisé dans un premier matériau, ledit cadran comprenant au moins deux appliques (3) réalisées dans un second matériau, le procédé comprenant les étapes suivantes :
- Se munir des appliques, celles-ci ayant subi préalablement une étape de fabrication durant laquelle elles sont rendues solidaires dans leur position définitive l'une par rapport à l'autre via un pont (5) afin de former au moins un ensemble d'appliques (7) ;
- Placer ledit ensemble d'appliques (7) sur le cadran et le fixer audit cadran ;
- Désolidariser les appliques les unes des autres par enlèvement du pont entre deux appliques.

2. Procédé d'assemblage selon la revendication 1, **caractérisé en ce que** l'épaisseur du pont (5) varie de 10% à 50% de l'épaisseur (h1) de l'applique.

3. Procédé d'assemblage selon les revendications 1 ou 2, **caractérisé en ce que** l'ensemble d'appliques (7) comprend au moins deux pieds (4) aptes à coopérer avec des trous (9, 9') du cadran.

4. Procédé d'assemblage selon la revendication 3, **caractérisé en ce que** les trous (9, 9') du cadran sont traversants ou borgnes.

5. Procédé d'assemblage selon l'une des revendications précédentes, **caractérisé en ce que** les appliques sont fabriquées en utilisant une technique choisie dans la liste comprenant : l'usinage, l'étampage, l'injection, le LIGA, l'impression 3D ou le formage à chaud.

6. Procédé d'assemblage selon l'une des revendications précédentes, **caractérisé en ce que** le pont est enlevé en utilisant une technique choisie dans la liste comprenant : la découpe laser ou l'usinage, la découpe mécanique, le meulage ou le polissage.

7. Procédé d'assemblage selon l'une des revendications précédentes, **caractérisé en ce que** le pont entre deux appliques d'un ensemble d'appliques est positionné de sorte à affleurer la surface des appliques visibles lorsque les appliques sont agencées sur le cadran.

8. Procédé d'assemblage selon l'une des revendications 1 à 6, **caractérisé en ce que** le pont entre deux appliques d'un ensemble d'appliques est positionné à mi-hauteur des appliques.

9. Ensemble d'appliques (7) comprenant au moins deux appliques (3), **caractérisé en ce que** lesdites appliques (3) sont rendues solidaires dans leur position définitive l'une par rapport à l'autre via un pont (5).

10. Ensemble d'appliques (7) selon la revendication 9, **caractérisé en ce que** l'épaisseur du pont (5) varie de 10% à 50% de l'épaisseur (h1) de des appliques.

11. Ensemble d'appliques (7) selon les revendications 9 ou 10, **caractérisé en ce que** le pont entre deux appliques d'un ensemble d'appliques est positionné à mi-hauteur des appliques.
